# EUROPEAN PATENT APPLICATION

(11) **EP 2 110 025 A1**
(43) Date of publication of application: **21.10.2009**
(21) Application number: 08154757.2
(22) Date of filing: 18.04.2008
(51) Int. Cl.: A23L 1/105, A23L 1/164, A23L 2/395

(54) **Cereal-based instant drink**

(71) Applicant: Nestec S.A., 1800 Vevey (CH)
(72) Inventor: Jun Xia, Dai, CH-1350 Orbe (CH); Wuersch, Pierre, CH-1814 La Tour-de-Peilz (CH)
(74) Representative: Rupp, Christian

(57) **Abstract**

The invention relates to cereal-based flakes which can be easily dispersed in a cold liquid and which provide a smooth instant drink rich in cereals, including wholegrain cereals. The invention also relates to a method for the preparation of a smooth cereal-based instant drink and to the manufacture of said flakes.

## Description

### Field of the invention

The present invention relates to cereal-based flakes which can be easily dispersed in a cold liquid and which provide a smooth instant drink rich in cereals, including wholegrain cereals. The invention also relates to a method for the preparation of said instant cereal drink and to the manufacture of said flakes.

### Background of the invention

Food products rich in cereal have experienced an increased interest due to the nutritive and healthy properties of such products.

Cereal-containing drinks are described in DE 198 47 349 for example.

Enzymatic hydrolysis can be used in the preparation of cereal-containing products in order to facilitate processing. This method is also used to liquefy cereal-containing products and, in infant food applications, to "pre-digest" the starch, thus making it more readily available once ingested.

EP 0 031 050 describes a process for the manufacture of a cereal-containing powder which can be reconstituted in cold liquids. This process comprises an enzymatic hydrolysis step.

EP 0 258 486 relates to a dietetic preparation comprising cereal which is prepared by enzymatic hydrolysis of a composition comprising starch. The cereal content of the preparation, based on dry matter, is 10-13%.

Wholegrain cereal, in particular, is of high interest since it comprises a higher fibre, vitamin and mineral content compared to refined grain products. For instance, the 2005 U.S. Dietary Guidelines Advisory Committee Report (Aug. 2004), indicates that consuming at least three servings of whole grain per day can reduce the risk of diabetes and coronary heart disease and may help with weight maintenance.

However, a high cereal content in general and a high wholegrain content in particular pose problems when used in powders which have to be reconstituted in liquid due to poor texture and viscosity.

### Object of the present invention

It is thus an object of the present invention to provide a highly nutritive beverage product rich in cereal including wholegrain, which can be easily and rapidly prepared in a cold liquid and which has a smooth texture.

### Summary of the invention

Thus, the present invention provides, in a first aspect, cereal-based flakes comprising at least 26% dry weight of wholegrain cereal. Said cereal-based flakes are suitable for preparing a cereal-based instant drink in a cold liquid. Said cereal-based flakes may be obtained by roller-drying.

In a second aspect, the invention relates to a cereal-based instant drink which may be prepared with said cereal-based flakes. This drink comprises at least 10g of cereal per 100mL of drink, supplied by said cereal-based flakes. The latter comprise at least 26% dry weight of wholegrain cereal.

A third aspect of the invention relates to a method for the preparation of a cereal-based instant drink comprising adding a cold liquid with cereal-based flakes such that the instant drink comprises at least 10g cereal per 100mL of drink and wherein at least 30% dry weight of the total cereal content is whole grain cereal, and to the instant drink obtainable by said method.

A method for the manufacture of cereal-based flakes suitable for preparing a cereal-based instant drink, comprising the steps of:
a. Mixing at least one type of cereal flour with water, wherein at least 30% dry weight of the cereal flour is wholegrain flour,
b. Subjecting the mix obtained in a) to an enzymatic hydrolysis,
c. Heat treating the mix,
d. Flaking the mix to obtain cereal-based flakes, also forms part of the present invention. The flaking step may be done by roller-drying followed by milling.

### Detailed description of the invention

The present invention relates to cereal-based flakes suitable for preparing a cereal-based instant drink in a cold liquid. By "instant drink" is meant a drink that may be reconstituted close to instantly upon addition of said cereal-based flakes in a drinkable liquid, into a smooth drink, without the need of further operations such as: heating the mixture or stirring for a long time said flakes into the liquid in order to reach a desired level of dispersion of said flakes or to reduce lumps. Such flakes disperse in liquids nearly instantly, very easily, even in cold liquids.

The flakes of the present invention are obtainable by roller-drying and thus have different physical characteristics to powders which have been spray-dried or freeze-dried for instance.

The cereal-based flakes comprise at least 26% dry weight of wholegrain cereal. Further, the wholegrain cereal represent at least 30% dry weight of the total cereal content of said cereal-based flakes.

The flakes of the present invention are characterised by a volume-weighed mean diameter (D₄₃) of 200 to 700 microns, preferably 350 to 650 microns. This characteristic is measured by laser diffraction using Malvern Mastersizer instrument. This measurement method is well known in the art. A volume-weighed mean diameter below these values would lead to a risk of clotting and unsatisfactory dispersion of the flakes into a liquid, while above these values, the reconstituted beverage would not be as smooth as required and would be too thick.

By "smooth" is meant a regular texture without lumps and/or semolina, flaky, coarse, gritty, sandy, fibrous particles. Smoothness is assessed using the skin, the mouth and palate. The throat is also quite sensitive to the presence of undesirable particles. Smoothness is generally assessed by squashing the product between the tongue and the palate and moving the tongue back and forth over the mass of the product.

Throughout the specification, the expression "dry-weight" is not meant to exclude residual water contained in cereals. It only means that the basis for computing the ratio or percentage does not include added water.

The cereal-based flakes are further **characterised in that,** upon addition to a cold liquid, they are suitable for providing a cereal-based instant drink comprising at least 10g of cereals per 100mL of drink. Moreover, at least 30% dry weight of the total cereal content is wholegrain cereal. These characteristics could be measured for instance with a standard serving of 25g to be added to a 200mL volume of liquid such as water or milk.

By "cold liquid" is meant a liquid having a temperature below 20°C, preferably between 4°C and 15°C. In an embodiment of the invention, cold liquid means a liquid at fridge temperature or above.

In an embodiment of the invention, at least 40% dry weight of the total cereal content is wholegrain.

Further, it is believed that the wholegrain cereal content should not be above 70% dry weight with respect of the cereal-based flakes, failing which dispersibility of the flakes into a cold liquid could again become an issue.

Reaching such a high content of cereal and of wholegrain cereal in a cold liquid, easily and without obtaining a lumpy drink is not straightforward, in particular due to the poor dispersibility of wholegrain cereal in cold liquid.

The liquid used to reconstitute the instant drink may be selected from water, juices, milk etc. Preferably, the liquid is milk.

The drink obtainable upon addition of the flakes in a liquid may thus be compared to a milk shake type product, a fruit drink, or a water-based drink. In fact, this mainly depends on the liquid which is readily available to the consumer. In a preferred embodiment, the cereal-based instant drink is an instant milk shake.

An advantage of the cereal-based flakes of the present invention is that they are highly nutritive. Upon reconstitution of a drink, the instant drink comprises at least 30% dry weight of wholegrain cereal with respect to the total cereal content of the drink. Furthermore, the reconstituted drink may comprise at least 10g of cereal per 100mL of drink, of which at least 30% dry weight is wholegrain cereal.

In an embodiment of the invention, at least 40% dry weight of the cereal content in the reconstituted drink is wholegrain.

In a particular embodiment, the wholegrain cereal content is no more than 70% dry weight of the total cereal content.

Thus, a cereal-based instant drink comprising at least 10g of cereal per 100mL of drink and wherein at least 30% dry weight of the total cereal content is wholegrain cereal, is part of the present invention.

The high content of cereal, and in particular of wholegrain cereal, has not been reported hitherto, presumably due to the difficulties which a high amount of wholegrain cereal cause for dispersibility and for the texture of the final product.

The reconstituted drink presents however a surprisingly smooth texture. This exceptional texture is achieved even when the flakes are reconstituted in cold (e.g. 8°C) milk or water.

The cereal present in the present flakes may be selected from rice, oat, rye, wheat, barley, buckwheat or any mixtures thereof. Preferably, the cereal is wheat.

The flakes may also comprise further ingredients selected from sugars, sweeteners, flavours, fruit powders, milk powders, vitamins, minerals, cocoa powder and any mixture thereof. If sugars are used, preferably, the added sugar is sucrose.

Preferably, the cereal-based flakes comprise at least 50% dry weight, preferably at least 60% dry weight, more preferably at least 70% dry weight, most preferably up to 80% dry weight cereal. Of this cereal content, between 30% dry weight and 70% dry weight is wholegrain cereal. In any case, the cereal-based flakes comprise at least 26% dry weight of wholegrain cereal.

In a particular embodiment, the cereal-based flakes comprise 70-75% wheat (of which 40-52% is wholegrain) and 15-20% added sucrose.

A method for the preparation of an instant drink comprising adding a cold liquid to cereal-based flakes such that the instant drink comprises at least 10g of cereal per 100mL of drink, of which at least 30% dry weight is wholegrain cereal, thus, also forms part of the invention.

An advantage of the invention is that it is possible to use a cold liquid for reconstituting a cereal-based drink. In other words, it is not necessary to heat the liquid prior to adding the cereal-based flakes to the liquid, or to heat the mix of liquid and flakes, in order to prepare a smooth drink. The liquid to be added may be selected from water, fruit juices or milk. Preferably, the liquid to be added to the cereal-based flakes is milk, even more preferably cold milk. "Cold liquid" has been defined above.

When reconstituting the cereal-based drink, the order of addition of the liquid and the cereal-based flakes is not essential. Thus, a cold liquid may be poured first into a container or a glass, and then the cereal-based flakes may be added to the liquid. It is also possible to pour the cereal-based flakes in the container or glass and then pour the desired cold liquid.

In an embodiment, the cereal-based flakes are provided in individual sticks containing a single serving. This may be interesting when it is desired to prepare a cereal-based drink out-of-home. In another embodiment, the cereal-based flakes can also be sold in bulk packages. In that case, the consumer measures himself the amount of flakes to be used or according to the instructions that may be provided on the packaging.

The cereal-based flakes used in the present method are preferably such as those described above.

Typically, the cereal-based flakes are mixed in an amount of 12-20g per 100mL of liquid. As an example, a serving is usually 25g of cereal-based flakes to be mixed to 200mL of cold liquid, such as water or milk.

Despite the high cereal content and the high wholegrain cereal content, the instant drink has a creamy and smooth texture.

Thus, the cereal-based instant drink obtainable by the method of the invention comprises at least 10g of cereal per 100mL of drink. It is highly nutritious and healthy for people of all ages, and can be easily prepared, in or out-of-home. Further, due to its high wholegrain content, the instant drink is a good source of healthy fibres.

The cereal-based flakes may be manufactured, in a first step, by mixing at least one type of cereal flour with water, wherein at least 30% dry weight of the cereal flour is wholegrain flour.

The cereal flour is preferably selected from rice, oat, rye, wheat barley or buckwheat flour, or any mixtures thereof. Most preferably the cereal flour is wheat flour.

The mix is then subjected to enzymatic hydrolysis, preferably with an alpha-amylase, more preferably with an endo-amylase, although exo-amylase may also be used. Alpha-amylase may be derived from *Bacillus sp.* such as *Bacillus subtilis, Bacillus amyloliquefaciens* or *Bacillus licheniformis,* as well as from *Aspergillus* fungi, such as *Aspergillus niger* or *Aspergillus oryzae*. These enzymes are commercially available.

The temperature, time and amount of enzyme used in the hydrolysis step can be routinely determined by a skilled person. The hydrolysis time is determined by the desired Dextrose Equivalent (DE). Preferably, a DE of 5% is required in the present invention. Thus, the hydrolysis is typically carried out at a temperature of 75°C to 90°C, preferably 80-85°C. The heat treatment is carried out typically for 1 to 20 minutes, preferably for 4 to 10 minutes.

After enzymatic hydrolysis, the mix is then pasteurised by a heat treatment at a temperature of 110 to 135°C.

The mix is then dried for instance by roller-drying, and milled, to obtain cereal-based flakes. These flakes may then be used as such as cereal-based ink flakes to be added into a liquid in order to prepare a cereal-based instant drink.

In an optional additional step, the cereal-based flakes may be dry mixed with further ingredients. Dry mixing typically includes milling of further ingredients with the flakes. Roller-drying and milling of the cereal-based flakes may also be done before dry mixing with said further ingredients. Typical further ingredients include sugars, sweeteners, flavours, fruit powders, milk powders, vitamins, minerals, cocoa powder and any mixtures thereof.

These further ingredients may also be added to the cereal flour in the first steps of the method.

Thus, a method for the manufacture of cereal-based flakes comprises the steps of:
a) mixing at least one type of cereal flour with water, wherein at least 30% of the cereal flour is wholegrain flour,
b) subjecting the mix obtained in a) to an enzymatic treatment,
c) heat treating the mix,
d) roller-drying the mix to obtain roller-dried cereal-based flakes.

Admixing further ingredients to the mix, such as those mentioned above, may occur during or after step a), or after step b), or after step c).

A milling step or other size-reduction operation may be provided for after step d) and there again, further ingredients such as those listed above may be added to the roller-dried cereal-based flakes, before, during or after the size-reduction operation.

Cereal based flakes according to the present invention and which may be used in the present method may thus be obtained by said method of manufacture.

The present invention is further illustrated herein by means of the following non-limiting examples.

### Examples

### Example 1

**The granulometry of the flakes was measured by laser diffraction using a Malvern Mastersizer instrument.**

| | Product description (wt %, dry matter) | GRANULOMETRY MALVERN LASER (VOLUME) D4.3 (µm) |
|---|---|---|
| **A** | Cereal-based flakes (wheat flour, wholegrain wheat flour 37 %, sugar) | 422 - 646 |
| **B** | Cereal-based flakes (fruit flavour): (wholegrain wheat flour 32 %, wheat flour, sugar, fruit flavour | 598 |
| **C** | Cereal-based flakes (fruit powder): wholegrain wheat flour 26.5 %, wheat flour, sugar, fruit powder | 361 |

### Example 2

25g of cereal-based flakes A according to Example 1 were added to 200mL of milk at 8°C. The mixture was shaken two or three times. This resulted in a drink with a light aerated smooth texture.

**The nutritional profile of the drink (per 200 mL) is indicated in the table below:**

| | |
|---|---|
| Energy | 220 kcal |
| Protein | 9 g |
| Fibre | 1 g |
| Fat | 8 g |

### Example 3

The cereal-based flakes of Example 1 were used and cereal-based drinks were reconstituted in the same manner as in Example 2.

The reconstituted drinks were brought to a temperature of 20°C. The drinks were put in turn in a glass tube of a volume of 100 mL and the time for 100 mL of product to flow out of the glass tube through a calibrated nozzle of 2.8mm was measured.

This assay gives an indication of the viscosity of the drink: the longer it takes a given volume of product to flow through the calibrated nozzle, the more viscous the drink is. It also gives an indication of the smoothness of the drink. If the drink is lumpy, then the flow through the nozzle is reduced.

| Product | Reconstitution in milk | Average time (s) |
|---|---|---|
| A | 25 g in 200 mL | 25.7 |
| B | 25 g in 200 mL | 21 |
| C | 25 g in 200 mL | 15.4 |

## Claims

1. Cereal-based flakes comprising at least 26% dry weight wholegrain cereal, said flakes being obtainable by roller-drying and being suitable for preparing a cereal-based instant drink in a cold liquid.

2. Cereal-based flakes according to claim 1, which upon addition in a cold liquid have the capacity to provide an instant drink comprising at least 10g of cereal per 100mL of drink.

3. Cereal-based flakes according to claim 1 or 2, wherein the cereal is selected from rice, oat, rye, wheat, barley, buckwheat or any mixtures thereof.

4. Cereal-based flakes according to any of the preceding claims, which comprise further ingredients selected from sugars, sweeteners, flavours, fruit powders, milk powders, vitamins, minerals, cocoa powder and any mixtures thereof.

5. Cereal-based flakes according to any of the preceding claims, comprising at least 50% dry weight cereal.

6. Cereal-based drink comprising at least 10g of cereal per 100mL of drink and wherein at least 30% dry weight of the total cereal content is wholegrain cereal.

7. Method for the preparation of a cereal-based instant drink comprising mixing a cold liquid and cereal-based flakes according to any of claims 1 to 5, such that said drink comprises at least 10g of cereal per 100mL of drink and wherein at least 30% dry weight of the total cereal content is wholegrain cereal.

8. Method according to claim 7, wherein the liquid is at a temperature comprised between 4°C and 20°C.

9. Method according to any of claims 7 or 8, wherein at least 40% dry weight of the cereal content is wholegrain cereal.

10. Method according to any of claims 7 to 9, wherein said liquid is milk.

11. Method for the manufacture of cereal-based flakes comprising the steps of:
a. Mixing at least one type of cereal flour with water, wherein at least 30% of the cereal flour is wholegrain flour,
b. Subjecting the mix obtained in a) to an enzymatic treatment,
c. Heat treating the mix
d. Roller-drying the mix to obtain roller-dried cereal-based flakes.

12. Method according to claim 11, wherein further ingredients are added to the mix during or after step a), or after step b), or after step c), said further ingredients being selected from sugars, sweeteners, flavours, fruit powders, milk powders, vitamins, minerals, cocoa powder and any mixtures thereof.

13. Method according to claim 11 or 12, wherein step d) is followed by one or both of the following steps:
e. Milling the roller-dried cereal-based flakes, before, after or at the same time as,
f. Dry-mixing of the cereal-based flakes with further ingredients said further ingredients being selected from sugars, sweeteners, flavours, fruit powders, milk powders, vitamins, minerals, cocoa powder and any mixtures thereof.
